# EUROPÄISCHE PATENTANMELDUNG

(11) **EP 1 995 621 A1**
(43) Veröffentlichungstag der Anmeldung: **26.11.2008**
(21) Anmeldenummer: 08015556.7
(22) Anmeldetag: 07.12.2006
(51) Int. Cl.: G02B 23/00

(54) **Kompaktes Fernrohr mit Umkehrprisma**

(62) Teilanmeldung aus: 06025350.7
(71) Anmelder: Swarovski-Optik KG, 6067 Absam i. Tirol (AT)
(72) Erfinder: Miller, Benno, 6020 Innsbruck (AT); Thaler, Wilfried, 6233 Kramsach (AT)
(74) Vertreter: Kador & Partner

(57) **Zusammenfassung**

Ein Fernrohr weist ein im Tubusgehäuse (1) befestigtes Innengehäuse (2) zur Führung der Fokussieroptik (6) auf, an dem das Umkehrprisma (4) mit einer Halterung (3) befestigt ist, die durch wenigstens einen sich in Richtung des Okulars erstreckenden Steg (9, 10) gebildet wird. Das Innengehäuse (2) weist einen als Lochscheibe (15) ausgebildeten Abschnitt auf, an dem das Umkehrprisma (4) mit seiner dem Objektiv zugewandten Basisfläche (14) angeordnet ist.

## Beschreibung

Die Erfindung bezieht sich auf ein Fernrohr mit wenigstens einem Tubusgehäuse mit einem Umkehrprisma und einer Fokussieroptik.

Während das Umkehrprisma in einem Fernrohr zur Bildumkehr vorgesehen ist, wird mit der Fokussieroptik die Einstellung der Bildschärfe bei unterschiedlicher Objektentfernung vorgenommen. Das Umkehrprisma ist im Allgemeinen mit einer Fassung versehen, um es im Tubus zu befestigen. Demgegenüber ist die Fokussieroptik in einer Führung im Tubus mit einem Stellglied, wie einer Spindel oder Schubstange, verschiebbar, welche mit einem Betätigungselement, wie einem Drehknopf, betätigbar ist.

Da sowohl das Umkehrprisma wie die Fokussieroptik auf der optischen Achse des Objektivs liegen müssen, ist eine hohe Fertigungsgenauigkeit erforderlich, um einen genaue Ausrichtung von Umkehrprisma und Fokussieroptik zu erreichen. Durch die Führung der Fokussieroptik im Tubus wird der Fertigungsaufwand weiter erhöht. Auch erfordert die Führung der Fokussieroptik in dem Tubusgehäuse eine zylindrische Bohrung, wodurch die Designmöglichkeiten des Tubusgehäuses stark eingeschränkt werden.

Aufgabe der Erfindung ist es daher, bei hoher Genauigkeit der Ausrichtung von Umkehrprisma und Fokussieroptik den Fertigungsaufwand wesentlich zu verringern.

Dies wird erfindungsgemäß mit dem im Anspruch 1 gekennzeichneten Fernrohr erreicht.

Vorzugsweise sind die Halterung und das Innengehäuse einstückig ausgebildet, beispielsweise als Metalldreh- oder Gussteil um eine hohe Steifigkeit sicherzustellen.

Die Halterung kann durch wenigstens einen Steg gebildet sein, der an einer Seitenfläche des Umkehrprismas flächig anliegt. Der Steg kann dazu plattenförmig ausgebildet sein. Um das Umkehrprisma auf die Achse des Innenrohres auszurichten, sind vorzugsweise wenigstens zwei Stege vorgesehen, die an gegenüberliegenden Seiten des Umkehrprismas anliegen. Das Umkehrprisma kann an dem bzw. den Stegen beispielsweise durch Ankleben befestigt sein.

Die Halterung für das Umkehrprisma, also der bzw. die Stege, verbinden vorzugsweise das Innenrohr mit einer Fassung für eine Rundoptik, die auf der von der Fokussieroptik abgewandten Seite des Umkehrprismas angeordnet ist. Die Rundoptik kann ein Okular- oder ein anderes Optikteil sein. Die Fassung für die Rundoptik ist vorzugsweise gleichfalls einstückig mit dem Innengehäuse ausgebildet.

An der Fassung für die Rundoptik liegt das Umkehrprisma mit der einen Basisfläche an. Mit der anderen, dem Objektiv zugewandten Basisfläche liegt das Umkehrprisma an einer Lochscheibe an, die mit dem Innengehäuse vorzugsweise einstückig ausgebildet ist. An der Lochscheibe sind vorzugsweise auch der oder die Stege zur Befestigung des Umkehrprismas angeordnet.

Das Innengehäuse ist vorzugsweise mit einem Flansch versehen, mit dem es an der Innenseite des Tubusgehäuses befestigt wird. Der Flansch ist vorzugsweise im Bereich der Lochscheibe an dem Innengehäuse vorgesehen.

Das Umkehrprisma kann ein beliebiges Umkehrprisma sein, beispielsweise ein herkömmliches Umkehrprisma, wie ein Doppel-Porro- oder Abbe-König-Prisma, vorzugsweise wird ein Schmidt-Pechan-Prisma verwendet.

Wenn sich zwischen die einzelnen Prismen des Umkehrprismas, z. B. eines Schmidt-Pechan-Prismas eine Blende erstreckt, kann die Blende gleichfalls am Innengehäuse befestigt sein, beispielsweise dadurch, dass sie mit dem Innengehäuse ebenfalls einstückig ausgebildet ist.

Durch das im Tubusgehäuse befestigte Innengehäuse, das einerseits die Fokussieroptik und andererseits das Umkehrprisma aufnimmt, wird erfindungsgemäß eine hohe Genauigkeit der Ausrichtung von Umkehrprisma und Fokussieroptik bei geringem Fertigungsaufwand erreicht. Zudem kann das Tubusgehäuse unabhängig von dem Innengehäuse gestaltet werden, so dass sich mehr Designmöglichkeiten ergeben.

Zudem kann an der am Innengehäuse befestigten Halterung weitere Optik angebracht werden, beispielsweise die Fassung für die Rundoptik, wodurch die Fertigung zusätzlich rationalisiert wird.

Insgesamt entsteht damit erfindungsgemäß eine Baugruppe, die lediglich beispielsweise mit dem Flansch an dem Innengehäuse an einem Flansch oder dergleichen im Tubusgehäuse befestigt wird. Damit ergibt sich eine Kontrollmöglichkeit der gesamten Baugruppe vor dem Einbau in das Fernrohr. Auch kann diese Baugruppe in unterschiedlich gestalteten Tubus- bzw. Fernrohrgehäusen verwendet werden. Es versteht sich, dass das erfindungsgemäße Fernrohr sowohl als monokulares wie auch als binokulares Fernrohr ausgebildet sein kann.

Nachstehend ist eine Ausführungsform des erfindungsgemäßen Fernrohres anhand der Zeichnung beispielhaft näher erläutert. Darin zeigen:
Fig. 1 eine Draufsicht auf das Innengehäuse, die Umkehroptik und die Fassung für eine Rundoptik; und
Fig. 2 einen Schnitt entlang der Linie II-II in Fig.1, sowie eines Teils des Tubusgehäuses, an dem das Innengehäuse befestigt ist.

Danach weist das Fernrohr ein in einem Tubusgehäuse (1) befestigtes rohrförmiges Innengehäuse (2) mit einer Halterung (3) für ein Umkehrprisma (4) und eine Fassung (5) für eine Rundoptik auf.

In dem Innengehäuse 2 ist eine Fokussieroptik (6) in einer hülsenförmigen Fassung (7) in Längs- oder Axialrichtung gemäß dem Doppelpfeil (8) verschiebbar geführt. Dazu kann ein nichtdargestelltes Stellglied, beispielsweise eine Gewindespindel, eine Schubstange, ein Hebel oder dergleichen vorgesehen sein, welches an der verschiebbaren Fassung (7) in dem Innengehäuse (2) angreift. Zum Durchgriff des Stellgliedes durch das Innengehäuse (2) kann in dem Innengehäuse (2) ein nicht dargestellter Schlitz oder dergleichen vorgesehen sein. Das Stellglied kann beispielsweise durch einen außen am Fernrohr angebrachten Drehknopf oder dergleichen Betätigungselement betätigt werden.

Das Innenrohr (2), die Halterung (3) und die Fassung (5) für die Rundoptik sind vorzugsweise einstückig ausgebildet. Die Halterung (3) wird durch zwei plattenförmige Stege (9) und (10) gebildet, die an gegenüberliegenden Seiten (11, 12) des Umkehrprismas (4) angeordnet sind. Das Umkehrprisma (4) kann mit seinen Seitenflächen (11, 12) an den Stegen (9, 10) angeklebt sein.

An der Fassung (5) für die Rundoptik liegt das Prisma (4) mit der einen Basisfläche (13) an, während es sich mit seiner anderen Basisfläche (14) in Anlage an einer Lochscheibe (15) befindet, die koaxial an dem dem Umkehrprisma (4) zugewandten Ende des Innengehäuses (2) angeordnet und mit dem Innenrohr (2) einstückig ausgebildet ist.

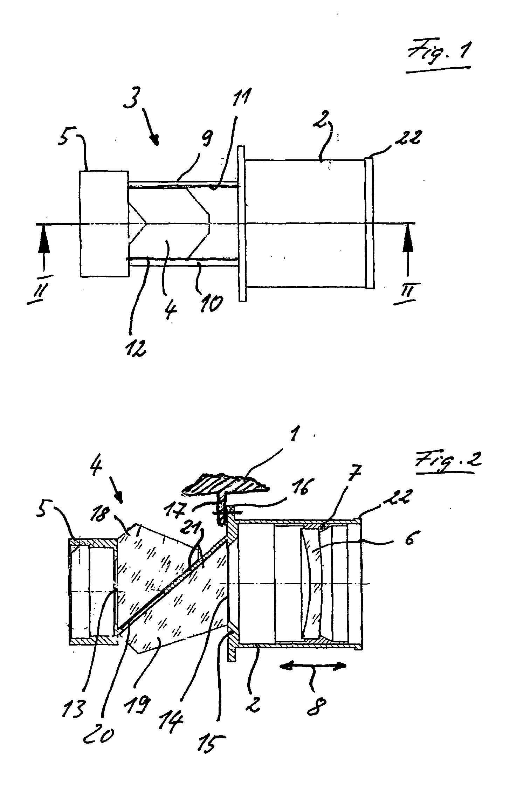

Gemäß Fig. 2 ist im Bereich der Lochscheibe ein sich vom Innengehäuse (2) nach außen erstreckender Flansch (16) einstückig am Innengehäuse (2) befestigt, um die Baueinheit aus Innengehäuse (2) mit Fokussieroptik (6), Halterung (3) mit Umlenkprisma (4) und Fassung (5) mit Rundoptik an einem Flansch (17) an der Innenseite des Tubusgehäuses (1) zu befestigen.

Das Umkehrprisma (4) ist als Schmidt-Pechan-Prisma ausgebildet. D.h. es weist zwischen den beiden Einzelprismen (18, 19) einen Luftspalt (20) und eine Blende (21) auf. Dabei ist die Blende (21) gleichfalls einstückig mit dem Lochscheibenabschnitt (15) des Innenrohres (2) verbunden. An seinem Flansch (16) gegenüberliegenden Ende weist das Innengehäuse (1) einen Außenbund (22) zur Versteifung auf.

## Patentansprüche

1. Fernrohr mit wenigstens einem Tubusgehäuse (1) mit einem Umkehrprisma (4) und einer Fokussieroptik (6), die in Tubuslängsrichtung (8) verschiebbar geführt ist, und einem im Tubusgehäuse (1) befestigten Innengehäuse (2) zur Führung der Fokussieroptik (6) mit einer Halterung (3), an der das Umkehrprisma (4) befestigt ist, wobei das Innengehäuse (2) einen als Lochscheibe (15) ausgebildeten Abschnitt aufweist, **dadurch gekennzeichnet, dass** die Halterung (3) zur Befestigung des Umkehrprismas (4) durch wenigstens einen sich in Richtung des Okulars erstreckenden Steg (9, 10) gebildet ist und das Umkehrprisma (4) mit seiner dem Objektiv zugewandten Basisfläche (14) an dem als Lochscheibe (15) ausgebildeten Abschnitt des Innengehäuses (2) angeordnet ist.

2. Fernrohr nach Anspruch 1, **dadurch gekennzeichnet, dass** die durch den Steg (9,10) gebildete Halterung (3) einstückig mit dem Innengehäuse (2) ausgebildet ist.

3. Fernrohr nach Anspruch 1, **dadurch gekennzeichnet, dass** der Steg (9, 10) an einer Seite (11, 12) des Umkehrprismas (4) flächig anliegt.

4. Fernrohr nach einem der vorstehenden Ansprüche, **dadurch gekennzeichnet, dass** an der Halterung (3) eine Fassung (5) für eine Rundoptik an der von der Fokussieroptik abgewandten Seite des Umkehrprismas (4) befestigt ist.

5. Fernrohr nach Anspruch 1 und 4, **dadurch gekennzeichnet, dass** der Steg (9, 10) die Fassung (5) für die Rundoptik mit dem Innengehäuse (2) verbindet.

6. Fernrohr nach Anspruch 1, **dadurch gekennzeichnet, dass** der als Lochscheibe (15) ausgebildete Gehäuseabschnitt einen nach außen ragenden Flansch (16) zur Befestigung des Innengehäuses (2) an dem Tubusgehäuse (1) aufweist.

7. Fernrohr nach Anspruch 1, **dadurch gekennzeichnet, dass** der Steg (9, 10) an der Lochscheibe (15) des Innengehäuses (2) angeordnet ist.

8. Fernrohr nach einem der vorstehenden Ansprüche, **dadurch gekennzeichnet, dass** das Umkehrprisma (4) wenigstens zwei Einzelprismen (18, 19) umfasst, zwischen die sich eine Blende (21) erstreckt, die an dem Innengehäuse (2) befestigt ist.

9. Fernrohr nach Anspruch 1 und 8, **dadurch gekennzeichnet, dass** die Blende an der Lochscheibe (15) des Innengehäuses (2) befestigt ist.

10. Fernrohr nach Anspruch 1, **dadurch gekennzeichnet, dass** die Blende (21) mit dem Innengehäuse (2) einstückig ausgebildet ist.

11. Fernrohr nach Anspruch 1, **dadurch gekennzeichnet, dass** das Innengehäuse (2) zur Befestigung an dem Tubusgehäuse (1) einen Flansch (16) im Bereich der Lochscheibe (15) aufweist.
